# EUROPEAN PATENT SPECIFICATION

(11) **EP 3 975 015 B1**
(45) Date of publication and mention of the grant of the patent: **31.01.2024**
(21) Application number: 21155575.0
(22) Date of filing: 05.02.2021
(51) Int. Cl.: G06F 21/51, G06F 21/50, G06F 21/60, G06F 8/70, G06F 21/30, G06F 21/45, G06F 8/60

(54) **APPLET PACKAGE SENDING METHOD AND DEVICE AND COMPUTER READABLE MEDIUM**
VERFAHREN UND VORRICHTUNG ZUM SENDEN VON APPLET-PAKETEN, UND COMPUTERLESBARES MEDIUM
PROCÉDÉ ET DISPOSITIF D'ENVOI DE PAQUETS D'APPLETS, ET SUPPORT LISIBLE PAR ORDINATEUR

(30) Priority: 28.09.2020 CN 202011041926
(43) Date of publication of application: 30.03.2022
(73) Proprietor: BEIJING BAIDU NETCOM SCIENCE TECHNOLOGY CO., LTD., Beijing 100085 (CN)
(72) Inventor: SHI, Nansheng, Beijing, 100085 (CN); XIE, Malin, Beijing, 100085 (CN); CHEN, Xin, Beijing, 100085 (CN); CHEN, Yuzhen, Beijing, 100085 (CN); CAO, Jiao, Beijing, 100085 (CN)
(74) Representative: Canzler & Bergmeier Patentanwälte Partnerschaft mbB

(56) References cited:
- EP-A1- 3 048 553
- CN-A- 111 523 102
- CN-A- 111 586 126

## Description

### TECHNICAL FIELD

The present disclosure relates to the field of computer technology, in particular, to the field of cloud computing technology and cloud platform technology, and specifically, to an applet package sending method and device, and a computer readable medium.

### BACKGROUND

An applet is an application that can be used without downloading and installing, and generally operated on a host application that is usually an application operating in a terminal operating system environment as a platform.

With rapid growth of the applet, more and more applets are distributed on the host application. Therefore, there is a need to control the distribution of the applets on the host application, and ensure that secure and efficient system communication and interaction can be performed between the applet and a legitimate host application.

### SUMMARY

Embodiments of the disclosure provide an applet package sending method and device, an electronic apparatus and a computer readable medium.

In a first aspect, according to an embodiment of the present disclosure, provided is an applet package sending method including: acquiring an identification of an applet included in an applet package acquisition request from a host server in response to the applet package acquisition request; and sending an applet package of the applet to the host server in a case where the identification of the applet is verified to be an applet package identification which is sent to the host server by a platform server in advance, wherein applet package identifications sent for a same applet of different host servers are different.

In a second aspect, according to an embodiment of the present disclosure, provided is an applet package sending device including: an applet packet acquisition request receiving module configured to acquire an identification of an applet included in an applet package acquisition request from a host server in response to the applet package acquisition request; and an applet package sending module configured to send an applet package of the applet to the host server in a case where the identification of the applet is verified to be an applet package identification which is sent to the host server by a platform server in advance, wherein applet package identifications sent for a same applet of different host servers are different.

In a third aspect, according to an embodiment of the present disclosure, provided is an electronic apparatus including: at least one processor; a memory storing at least one program which, when executed by the at least one processor, cause the at least one processor to perform the above-mentioned applet package sending method; and at least one input/output (I/O) interface connected between the at least one processor and the memory and configured to enable information interaction between the at least one processor and the memory.

In a fourth aspect, according to an embodiment of the present disclosure, provided is a computer readable medium storing a computer program which, when executed by a processor, cause the processor to perform the above-mentioned applet package sending method.

According to the applet package sending method and device, electronic apparatus and computer readable medium provided by the embodiments of the present disclosure, after receiving the applet package acquisition request from the host server, the platform server may acquire the applet identification included in the applet package acquisition request from the applet package acquisition request, and may send the applet package of the applet to the host server in the case where the identification of the applet is verified to be the applet package identification which is sent to the host server by the platform server in advance.

Through the applet package sending method and device, the electronic apparatus and the computer readable medium of the present disclosure, the applet package identifications sent for the same applet of different host servers are different, so that safety control during an applet packet sending process is improved through the different applet packet identifications of the same applet of the different host servers

CN111586126, CN111523102 and EP3048553 are relevant prior art documents.

### BRIEF DESCRIPTION OF THE DRAWINGS

The invention is defined by the independent claims.

Preferred embodiments are defined in the dependent claims.

Accompanying drawings are used to provide a further understanding of embodiments of the present disclosure, constitute a part of the specification, are used to explain the present disclosure together with the embodiments of the present disclosure, and do not constitute a limitation to the present disclosure. The above and other features and advantages will become more apparent to those skilled in the art by describing detail exemplary embodiments with reference to the accompanying drawings, in which:
FIG. 1 is a schematic view of a scene according to an embodiment of the present disclosure;
FIG. 2 is a flowchart of an applet package sending method according to an embodiment of the present disclosure;
FIG. 3 is a schematic view of a relational model of an application identification and applet package identifications according to an embodiment of the present disclosure;
FIG. 4 is a schematic view of a system framework according to an embodiment of the present disclosure;
FIG. 5 is a block diagram of an applet package sending device according to an embodiment of the disclosure;
FIG. 6 is a block diagram of an electronic apparatus according to an embodiment of the disclosure;
FIG. 7 is a block diagram of a computer readable medium according an embodiment of the disclosure.

### DETAILED DESCRIPTION

It should be understood that both the exemplary embodiments and the specific terms disclosed in the present disclosure are for the purpose of illustration, rather than for limiting the present disclosure. It is obvious to those skilled in the art that the features, characteristics and/or elements described in connection with a particular embodiment may be used alone or in combination with the features, characteristics and/or elements described in connection with other embodiments, unless expressly indicated otherwise. Therefore, it should be understood by those skilled in the art that various changes in form and detail may be made without departing from the scope of the present disclosure as set forth in the appended claims.

In order to enable those skilled in the art to better understand a technical solution of the present disclosure, an applet package sending method and device, an electronic apparatus and a computer readable medium provided by the present disclosure are described in detail below with reference to the accompanying drawings.

Example embodiments will be described more fully hereinafter with reference to the accompanying drawings, but the example embodiments may be embodied in different forms and should not be interpreted as being limited to the embodiments set forth herein. Rather, the embodiments are provided to make the present disclosure to be thorough and complete and to enable those skilled in the art to fully understand a scope of the present disclosure.

The embodiments of the present disclosure and features in the embodiments may be combined with each other without conflict. As used herein, a term "and/or" includes any and all combinations of one or more associated listed items.

Terms used herein are only used to describe specific embodiments and are not intended to limit the present disclosure. As used herein, singular forms "a", "an" and "the" are intended to include plural forms as well, unless contexts clearly indicate otherwise. It should be also understood that terms "include", "including" and/or "made of" and the like are used in the specification to specify presence of features, integers, steps, operations, elements, and/or components, but do not preclude the presence or addition of one or more other features, integers, steps, operations, elements, components, and/or combinations thereof.

Unless otherwise defined, meanings of all terms including technical and scientific terms used herein are the same as those commonly understood by those of ordinary skill in the art. It should also be understood that terms such as those defined in commonly used dictionaries should be interpreted as having meanings consistent with their meanings in a related technology and in background of the present disclosure, and will not be interpreted as having idealized or over formal meanings, unless specifically defined as such herein.

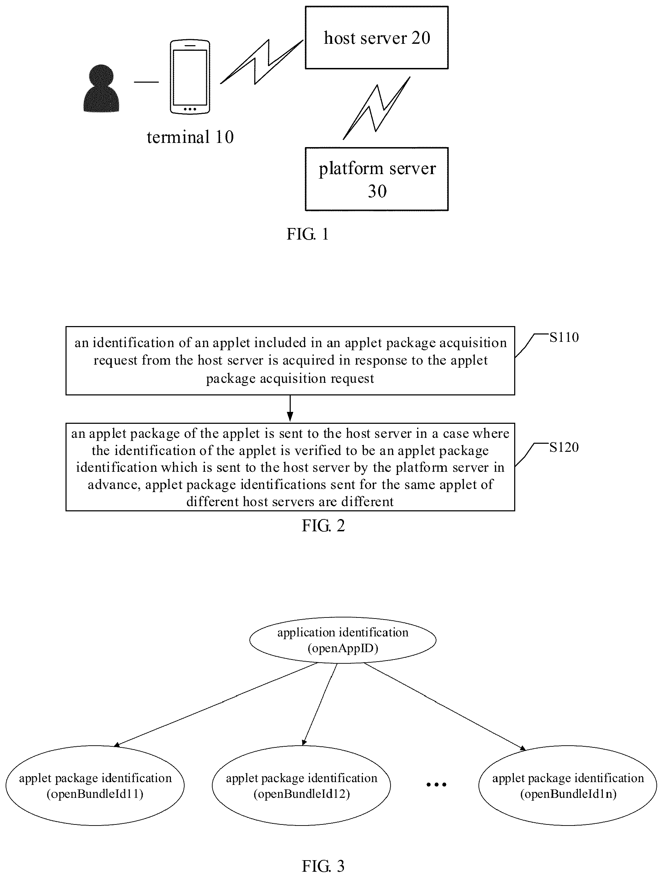

FIG. 1 is a schematic view of a scene according to an embodiment of the present disclosure. The scene as shown in FIG. 1 includes a terminal 10, a host server 20, and a platform server 30. A host application may be operated on the terminal 10, and therefore, in the description of embodiments below, the terminal 10 may also be referred to a host application client. An applet may operate in dependence upon a certain host application. For example, the applet may be invoked in various host applications such as a social application, a map application, a video application, a search and resource type application, and the like.

An applet package needs to be downloaded first when the applet is first opened by the host application operating on the terminal 10. According to an embodiment of the present disclosure, in FIG. 1, the host server 20 sends basic information of the applet issued by the platform server 30 to the terminal 10 after acquiring the basic information of the applet, the terminal 10 selects the applet package of the applet in the basic information through the host application, and requests the platform server 30 to acquire the applet package through the host server 20, the platform server 30 sends the requested applet package to the terminal 10 through the host server 20, and the terminal 10 operates the corresponding applet on the local host application.

The terminal 10 may access an internet, and illustratively, the terminal 10 may include, but is not limited to, a mobile phone, a personal computer, a tablet computer, a smart wearable device, a desktop computer, a notebook computer, and the like, each of which may be installed with various host applications.

The host server 20 may be a backend server of host applications operating on the terminal 10. A host platform server 30 may be a server for providing applet packages. In the descriptions of the embodiments below, the host platform server may be simply referred to as the platform server.

The host server 20 may establish communication with the terminal 10 and the platform server 30. The host server 20 and the platform server 30 may be a single service device, or may be a server cluster including a plurality of service devices. Specific configurations may be flexibly adjusted according to an actual application requirement.

In the following descriptions of the embodiments, since the host application may be operated on the terminal, the terminal may also be referred to as a host application side.

The following embodiments can be applied to a system architecture according to the disclosure. For sake of clarity, the following embodiments may refer to and cite each other.

In some scenes, the platform server 30 may send an applet information list to the host application operating on the terminal 10 based on an access request initiated by the host application or a recommendation by the platform server 30. Applet information in the applet information list may include information such as an applet name, an applet icon, an applet text description and the like. When the applet information is sent, an applet key (Appkey) of the applet may be sent together, wherein the applet key is used for uniquely identifying the applet.

Since the applet information list of the applet obtained by all host servers is the same, when the host application corresponding to the host server operates on the host application side, a newest applet package of a applet selected from the applet information list may be acquired at any time through an interface with the platform server 30 according to the Appkey of the selected applet, and therefore there is a problem that an authority of the platform server to send the applet package is not strictly controlled.

FIG. 2 is a flowchart of an applet package sending method according to an embodiment of the present disclosure. Referring to FIG. 2, the applet package sending method according to the embodiment of the present disclosure may include steps S110 and S120.

At step S 110, an identification of an applet included in an applet package acquisition request from the host server is acquired in response to the applet package acquisition request.

At step S120, an applet package of the applet is sent to the host server in a case where the identification of the applet is verified to be an applet package identification which is sent to the host server by the platform server in advance, applet package identifications sent for the same applet of different host servers are different.

According to the applet package sending method of the embodiment of the present disclosure, the platform server acquires the identification of the applet included in the applet package acquisition request from the applet package acquisition request after receiving the applet package acquisition request from the host server, and sends the applet package of the applet to the host server in the case where the identification of the applet is verified to be the applet package identification which is sent to the host server by the platform server in advance.

According to the applet packet sending method, the applet package identifications for the same applet of different host servers are different, that is, the applet packet identifications can be used for identifying the applet packet of the same applet of different host servers, thereby reinforcing authority control and improving safety control during an applet packet sending process through different applet packet identifications of the same applet of different host servers.

According to an embodiment of the present disclosure, prior to step S110, the applet package sending method further includes steps S11 to S13. At step S11, applet information of at least one applet and an applet key corresponding to each applet are acquired in response to an applet information acquisition request from the host server. At step S12, the applet package identification is generated based on the applet key of each applet, the applet key of each applet corresponds to one applet package identification, and the applet package identifications generated for the same applet of different host servers are different. At step S13, the applet information of the at least one applet and the applet package identification of each applet are sent to the host server.

According to an embodiment of the present disclosure, the applet information of the at least one applet may be in a form of an information list or an information collection. It should be understood that the embodiments of the present disclosure do not specifically limit a specific form of the applet information.

According to an embodiment of the present disclosure, before sending the applet package to the host server, the applet package identification (openBundleId) corresponding to the Appkey of each applet in the applet information of the at least one applet to be sent to each host server is generated in response to the applet information acquisition request. Since the applet package identifications generated for the same applet of different host servers are different, the host server can send the applet package acquisition request to the host server by using the applet package identification received by itself, thereby reinforcing authority control and improving safety control during the applet packet sending process.

As an example, it is assumed that applet keys of applets acquired by a host server A from the platform server are Appkey 1, Appkey2 and Appkey3, the generated applet package identifications corresponding to the application keys are openBundleId1, openBundleId2, and openBundleId3 respectively.

According to an embodiment of the present disclosure, the package identification sent at step S13 is an encrypted applet package identification. After generating the applet package identification based on the applet key of the applet at step S12, the applet package sending method according to the present disclosure may further include step S12-01.

At step S12-01, the applet package identification of each applet is encrypted by using a preset key to acquire the encrypted applet package identification, the preset key corresponding to the host server is different from preset keys of other host servers, the preset key of the host server is stored in the platform server, and the preset key of the host server is in a non-public state.

According to an embodiment of the present disclosure, the identification of the applet included in the applet package acquisition request acquired in response to the applet package acquisition request from the host server may be the encrypted applet package identification acquired by encrypting, by the platform server, the applet package identification according to a pre-generated encryption key for the host server.

According to an embodiment of the present disclosure, the platform server may generate, for the host server, the encrypted openBundleId corresponding to the Appkey of each applet of the at least one applet, and each encrypted openBundleId may be acquired by encrypting with the preset key, the host server stores its private key, and a public key of the host server is stored in the platform server, and the public key of the host server may not public to other host servers.

For example, the platform server may generate different public and private keys for the host server, and encrypt the openBundleId of the applet to be sent to the host server by using the public key of the host server as the preset key, the public key of the host server is stored in the platform server and is not public.

For example, the platform server may also generate one key for the host server, and encrypt the openBundleId of the applet to be sent to the host server by using the generated key, and the key generated for the host server is stored in the platform server and is not public.

After sending the applet information of the at least one applet and the encrypted openBundleId of each applet in the at least one applet to the host server A, the host server A may generate the applet package acquisition request after selecting a target applet without decrypting the encrypted openBundleId of each applet, and send the applet package acquisition request to the platform server, the applet package acquisition request carries the encrypted openBundleId of the target applet.

With respect to different host servers, the key for encrypting the applet package identification of each applet is stored in the platform server and is not public, thus, even if the encrypted openBundleId for the applet of the host server A is acquired by a host server B, the host server B cannot decrypt the encrypted openBundleId because the host server B cannot acquire the key for encrypting the openBundleId of the applet of the host server A, so that the host server B cannot access the platform server to acquire the applet package having the openBundleId. Therefore, a security risk that the host server B acquires the openBundleId of the applet of the host server A to acquire the applet package having the openBundleId of the host server A is reduced, a security during the applet package sending process is improved, and a legitimate benefit of the host server A is guaranteed.

According to an embodiment of the present disclosure, the applet package identification sent at step S13 is an applet package identification in a valid state, after generating the applet package identification based on the applet key of the applet at step S12, the applet package sending method according to the present disclosure may further include steps S21 and S23.

At step S21, a new applet package identification is generated for an applet package identification meeting an invalid processing condition to acquire the new applet package identification of each applet. At step S23, the new applet package identification is set to the valid state and the applet package identification meeting the invalid processing condition is set to an invalid state.

The invalid processing condition includes at least one of that generation time of the applet package identification exceeds a preset valid period from current time, that server information of the platform server is changed, and that preset traffic abnormality information of the platform server is monitored.

According to an embodiment of the present disclosure, the openBundleId is time sensitive and has timeliness.

For example, when the generated openBundleId reaches preset time-to-live (TTL), the applet information needs to be issued again, and the newly generated openBundleId corresponding to the Appkey of each applet is issued again when the applet information is issued again. The preset TTL according to the present disclosure may be a time period, for example, greater than or equal to one day and less than or equal to one month, and a specific period of the TTL is not limited in the embodiments of the present disclosure and may be determined according to an actual scene.

For another example, the platform server may also regenerate the openBundleId corresponding to the Appkey of each applet in a case where the server information of the platform server is changed or where the preset traffic abnormality information of the platform server is monitored. The change of the server information may include, for example, information about apparatus identification, a network address or the like of the server is changed.

According to an embodiment of the present disclosure, the openBundleId is also variable. That is, after a time period or after a change of an applet host platform, the issued applet package identification of the applet package will change. Safety of openBundleId is improved through the timeliness and the variability of the openBundleId.

According to an embodiment of the present disclosure, before the applet packet identification meeting the invalid processing condition is set to the invalid state at step S23, the applet packet sending method according to the present disclosure may further include that an interval period between current time and a time point at which the new applet package identification is generated is determined to be equal to a preset transition period.

That is, after the new applet package identification is set to the valid state, the applet package identification meeting the invalid processing condition is set to the invalid state after the preset transition period has passed.

According to an embodiment of the present disclosure, when the openBundleId is changed periodically according to the TTL, the new applet package identification may take effect immediately after being generated, and at this time, if the previously generated openBundleId is set to the invalid state immediately, it may cause the hose server to fail to acquire the applet package by using the previously generated openBundleId before updating the local openBundleId in time. Thus, in order to ensure that the host server downloads or updates the applet package before the openBundleId which is using by the host server becomes invalid, validities of the previously and newly generated openBundleIds within the preset transition period may be retained, thereby improving efficiency and flexibility of downloading the applet package.

It should be noted that the preset transition period according to the embodiment of the present disclosure may be determined according to a service related to the applet to be issued to the host server, and for example, the preset transition period may be an hour-level period, for example, one hour or two hours, and may be specifically set according to an actual scene, which is not specifically limited in the embodiments of the present disclosure.

According to an embodiment of the present disclosure, after generating the new applet package identification for the applet package identification meeting the invalid processing condition, the applet package sending method according to the present disclosure may further include step S31.

At step S31, an application identification is generated based on the applet package identification of each applet, applet package identifications corresponding to the same applet key generated at different time have the same application identification.

According to an embodiment of the present disclosure, sending the applet information of the at least one applet and the applet package identification of each applet to the host server at step S13 may specifically include that sending the applet information of the at least one applet, the applet package identification of each applet and corresponding application identification to the host server.

According to an embodiment of the present disclosure, the corresponding application identification may be an application identification corresponding to the applet package identification of each applet.

According to an embodiment of the present disclosure, in consideration that the openBundleId of the issued applet package may change after a time period or after the applet host platform is changed, one or more pieces of the applet information is issued together with the application identification (openAppId), having a unique identifier, which may be used to indicate uniqueness of the openBundleIds of the same applet generated at different time.

Sending the applet information of the at least one applet, the openBundleId of each applet of the at least one applet, and the openAppId corresponding to the openBundleId of each applet of the at least one applet to the host server may cause the host server to identify a plurality of openBundleIds in different time periods as corresponding to the same openAppId.

For easy understanding, FIG. 3 is a schematic view of a relationship model of the openAppId and the openBundleIds according to an embodiment of the present disclosure.

As shown in FIG. 3, it is assumed that openBundleId1 indicates an applet package identification corresponding to an applet key Appkeyl of an applet, openBundleId11, openBundleId12, ......, openBundleIdln (n is an integer greater than or equal to 1) indicate the applet package identifications, in different time periods, of the same applet issued to a designated host server by the platform server at each time, and the openBundleIds (openBundleId11, openBundleId12, ......, openBundleIdln) correspond to one openAppId in different time periods.

According to an embodiment of the present disclosure, when the platform server sends the applet information to the host server, the applet information and the encrypted openBundleId may be sent together with the openAppId corresponding to the openBundleId. The following Table 1 schematically shows main contents of the applet information sent by the platform server to the host server according to an exemplary embodiment of the present disclosure.

**Table 1 main contents of the applet information**

| Information item | Information content |
|---|---|
| Applet name (name) | Name 1 |
| Application identification (openApId) | 12311652222 |
| Applet package identification (openBundleId) | HSSYmqX8ST2SKSKSKSTQSxiQ |

According to an embodiment of the present disclosure, the contents of the applet information may further include, for example, information such as an applet name, an applet icon, an applet text description and the like, which is not specifically limited in the embodiments of the present disclosure.

The above Table 1 illustratively shows one piece of the applet information, the encrypted openBundleId and the openAppId corresponding to the openBundleId.

According to an embodiment of the present disclosure, since one openAppId corresponds to the plurality of openBundleIds in different time periods, it is convenient to identify the openBundleIds acquired in different time periods as the openBundleId of the same applet after a user acquires the applet information and the encrypted openBundleId, thereby improving usability of a system and download efficiency of the applet package.

According to an embodiment of the present disclosure, after the identification of the applet included in the applet package acquisition request is acquired at step S110, the applet package sending method may further include step S41.

At step S41, a digital signature certificate included in the applet package acquisition request is acquired.

Accordingly, sending the applet package of the applet to the host server at step S120 may further include that verifying the digital signature certificate by using an asymmetric encryption private key of the host server stored by the platform server in advance, and sending the applet package of the applet to the host server in a case where the digital signature certificate is successfully verified.

According to an embodiment of the present disclosure, a key used by the host server to generate the digital signature certificate may be a key dynamically issued by the platform server through a Package Management Service (PMS), and the key is time sensitive and has timeliness. With respect to the key that is out of time, the platform server may re-issue the key which is used by the host server to generate the digital signature certificate. In the embodiment, the PMS may be a system service operating during a process of the platform server for deploying and downloading the applet package.

According to an embodiment of the present disclosure, the platform server may acquire the identification of the applet and the digital signature certificate included in the applet package acquisition request from the host server in response to the applet package acquisition request, and send the applet package of the applet to the host server in a case where the identification of the applet is verified to be the applet package identification which is sent to the host server by the platform server in advance and the digital signature certificate is successfully verified.

In the applet package sending method according to the embodiment, since the applet package identifications sent for the same applet of different host servers are different, the host server needs to provide the encrypted openBundleId corresponding to the Appkey of the applet of the host server and the digital signature certificate to acquire the corresponding applet package requested to be downloaded.

According to an embodiment of the present disclosure, a process of performing the digital signature and verifying the digital signature certificate may include that, for example, the host server may use the asymmetric encryption private key of itself to perform digital signature on contents carried in the applet package acquisition request, and the platform server may verify the digital signature by using the asymmetric encryption private key of the host server after the applet package acquisition request sent by the host server is received, so that legitimacy of the openBundleId or the encrypted openBundleId carried in the applet package acquisition request is verified by performing an identity authentication on the host server that sent the applet package acquisition request through the digital signature. Issuing of the applet package is allowed in a case where the verification of the legitimacy is passed, so that safety of the applet package sending process is improved.

According to an embodiment of the present disclosure, the applet packet sending method may further include steps S51 and S52 before step S110.

At step S51, a bidirectional identity authentication is performed between the platform server and the host server in response to a data channel establishment request from the host server. At step S52, a client identification of the host server is stored and a secure data transmission channel is established between the platform server and the host server in a case where the bidirectional identity authentication is passed, the client identification of the host server is used for uniquely identifying the host server and is stored in a closed source part of a Software Development Kit (SDK) of the platform server.

According to an embodiment of the present disclosure, the above steps S51 and S52 may be performed before step S11, that is, before the platform server acquires the applet information of the at least one applet and the applet key of each applet in response to the applet information acquisition request from the host server. That is, the secure data transmission channel may be established first, and then the applet information acquisition request from the host server is received, so that secure data protection is started during the acquiring of the applet information, and thus system security management and control are improved.

According to an embodiment of the present disclosure, the host server needs to establish the secure data transmission channel with the platform server before sending the applet package acquisition request to the platform server, and performs the bidirectional identity authentication between the platform server and the host server during the establishing of the secure data transmission channel. The client identification (ClientID) of the authenticated host server may be stored in the closed source part of the applet package framework SDK of the platform server, so that communication content can be encrypted through the secure data transmission channel.

The establishing of the secure data transmission channel between the platform server and the host server will be described through the following example including steps S201 to S204.

At step S201, the host server acquires information of a Token (Token) through the platform server.

For example, the host server sends a Token acquisition request to the platform server after logging in the platform server through a user name and a password, the platform server signs a Token and send the Token to the host server after verifying the user name and the password of the host server, so that the host server requests to establish the data transmission channel for sending the applet based on the Token.

According to an embodiment of the present disclosure, the platform server may send the Token to the host server after a login authentication for the host server is passed through an Access Key (AK) and a Secret Access Key (SK).

According to an embodiment of the present disclosure, when the host server registers on the platform server for the first time, the platform server may allocate the AK and the SK to the host server, the AK is used to identify the host server, and the SK is used as a key for symmetric encryption communication between the platform server and the host server. The SK can be stored by the platform server and does not need to be issued to the host server. That is, the key of the host server is stored in the platform server and is invisible to other host server, and even if the other host server illegally acquires the openBundleId of the host server, the other host server cannot decrypt the openBundleId, so that security of symmetric encryption between the host server and the platform server is enhanced.

According to an embodiment of the present disclosure, encryption strength is not lower than that of an Advanced Encryption Standard (AEC), such as AES 256 bits encryption. For example, in the embodiment, encryption can be performed by using a Cipher Block Chaining (CBC) mode of the AES encryption.

At step S202, the host server sends a channel establishment request carrying the encrypted client identification of the host server to the platform server.

For example, the client identification of the host server may be the ClientID for uniquely identifying the host server.

At S203, the platform server sends a response message carrying a client encrypted identification and a ticket of the platform server to the host server after the client identification of the host server is successfully decrypted and verified.

At step S204, the host server establishes the data transmission channel with the platform server according to the ticket after the client identification of the platform server is successfully decrypted and verified.

Through the above steps S201 to S204, the secure data transmission channel can be established between the host server and the platform server after the bidirectional identity authentication is completed. For example, after the secure data transmission channel is established, when requesting to download the applet package through the data transmission channel, the ticket is presented (the ticket is used as a channel key) or communication content to be sent is encrypted by using the ticket, and the platform server identifies the identity of the host server after decrypting the encrypted communication content.

During the establishing of the secure data transmission channel, a part of the SDK of the platform server is closed and cannot be tampered, and the client identification of the host server and the client identification of the platform server are included in the SDK as unique identification information, so that identity forgery of the user can be prevented. Therefore, even if the host server A steals the applet information of the host server B or acquiring the request of the host server B by simulating, the host server A cannot forge the identity of the host server B, and cannot acquire the applet package issued for the host server B through the secure data transmission channel, so that security guarantee is provided for the downloading of the applet package.

According to an embodiment of the present disclosure, the sending of the request from the host server to the platform server may be based on a Hypertext Transport Protocol (HTTP). The secure data transmission channel between the host server and the platform server can use a self-defined transport layer protocol of a platform, so as to provide a protocol and a basic library for communication security between the host server and the platform server. It should be understood that the embodiments of the present disclosure do not enforce the use of the self-defined transport layer protocol, and any communication protocol capable of providing security guarantees may be used in the present disclosure.

According to an embodiment of the present disclosure, step S110 may include steps S61 and S62.

At step S61, the encrypted communication content included in the applet package acquisition request is acquired in response to receiving the applet package acquisition request of the host server through the secure data transmission channel established in advance. At step S62, the identification of the applet included in the communication content is acquired after the communication content is decrypted and the identity authenticating of the host server according to the client identification of the host server is successful.

According to an embodiment of the present disclosure, when the host server requests the platform server to acquire the applet package, the openBundleId corresponding to the Appkey of the applet may need to be encrypted through the secure data transmission channel. As an example, the openBundleId may be encrypted and decrypted by using the key for the symmetric encrypted communication between the platform server and the host server, which is generated during the establishing of the secure data transmission channel. The keys for the symmetric encrypted communication are different for different host servers, and the key for the symmetric encrypted communication of the host server is stored in the platform server and is not public to other host servers, so that secure data transmission is achieved during the acquiring of the applet package corresponding to the host server, and effective system communication and information interaction between the platform server and the legitimate host server of the applet are ensured.

According to an embodiment of the present disclosure, step S110 may further include steps S63 and S64.

At step S63, the encrypted communication content included in the applet package acquisition request is acquired in response to the applet package acquisition request of the host server received through the security data transmission channel. At step s64, the identification of the applet and the digital signature included in the communication content is acquired after the communication content is decrypted and the identity authenticating of the host server according to the client identification of the host server is successful.

According to an embodiment of the present disclosure, when the host server requests the platform server to acquire the applet package, the openBundleId corresponding to the Appkey of the applet and the digital signature are encrypted through the secure data transmission channel, so that secure data transmission and identity authentication are achieved during the acquiring of the applet package corresponding to the host server, and thus effective system communication and information interaction between the platform server and the legitimate host server of the applet are ensured

In a practical application scene, there may be a problem of acquiring the applet package through private exchanging by bypassing the platform server between host servers. For example, an owner of the host server is John, John has two companies A and B corresponding to the host server A and the host server B respectively, the host server A and the host server B carry out the private exchanging, that is, the host server B acquires the applet information and the applet package of the host server A by using the openBundleId, the key and the signature certificate of the host server A after acquiring the key and the signature certificate of the host server A. The above process can be interpreted as the private exchanging between the host server A and the host server B through a set of common accounts. In the practical application scene, the private exchanging is not allowed in principle, since the private exchanging may damage benefit of the platform server and cause ecological confusion of an applet alliance.

Considering the above problem, the present disclosure provides a manner of detecting the client identification of the host server and/or monitoring traffic.

According to an embodiment of the present disclosure, the applet package sending method may further steps S71 and S72 after receiving the applet package acquisition request from the host server at step S110. At step S71, the host server using the secure data transmission channel at present is determined as an illegal host server in a case where the client identification of the host server using the secure data transmission channel at present is monitored to be inconsistent with the client identification of the host server corresponding to the establishing of the secure data transmission channel stored in the platform server. At step S72, the illegal host server is shielded.

According to an embodiment of the present disclosure, since the host server needs the applet framework to operate the downloaded applet, the applet framework can start a monitoring and reporting mechanism for the host server, and the ClientID of the illegal host server can be monitored and shielded.

According to an embodiment of the present disclosure, the applet package sending method further includes steps S81 to S83 after sending the applet package to the host server at step S120.

At step S81, request times (i.e., a request number) of the applet package acquisition request received from the host server in a preset time period is monitored as a first request number monitoring result. At step S82, the request times of the applet package acquisition request received in the preset time period is continuously monitored as a second request number monitoring result after acquiring the new applet package identification of each applet. At step S83, traffic abnormality information of the platform server is acquired in a case where a difference value between the first request number monitoring result and the second request number monitoring result exceeds a preset request time threshold value.

Through the above steps S81 to S83, downloading times of each applet package can be monitored, and the traffic is monitored through periodical replacement of the openBundleId. After the openBundleId is re-issued, the host server needs to re-initiate the applet package acquisition request according to the new openBundleId. If the private exchanging problem needs to be processed, the host server A needs a certain time period for sending the new openBundleId and its account to the host server B, and in the time period, the traffic of the platform server corresponding to the applet package acquisition request fluctuates, for example, is greatly reduced, which is reflected in that the difference value between the first request number monitoring result and the second request number monitoring result exceeds the preset request time threshold value, so that it can be determined that there is a high probability of traffic abnormality.

According to an embodiment of the present disclosure, when the host server is a host server in a white list preset by the platform server and the traffic corresponding to the applet packet acquisition request of the host server is within a predetermined traffic threshold range, sending the applet packet of the applet to the host server at step S120 includes that sending the applet package of at least one designated applet to the host server.

According to an embodiment of the present disclosure, in consideration of temporary access to the platform server by a part of host servers, the platform server may allow a part of applet packages that may be provided by default to be acquired in a manner of setting the white list and a traffic quota, so that a flexible process of sending the applet package is performed according to temporary access characteristics of the part of host servers, for example, the process can be used in an application scene such as a collaboration experiment directly regarding the sending of the applet package between the platform server and the host server.

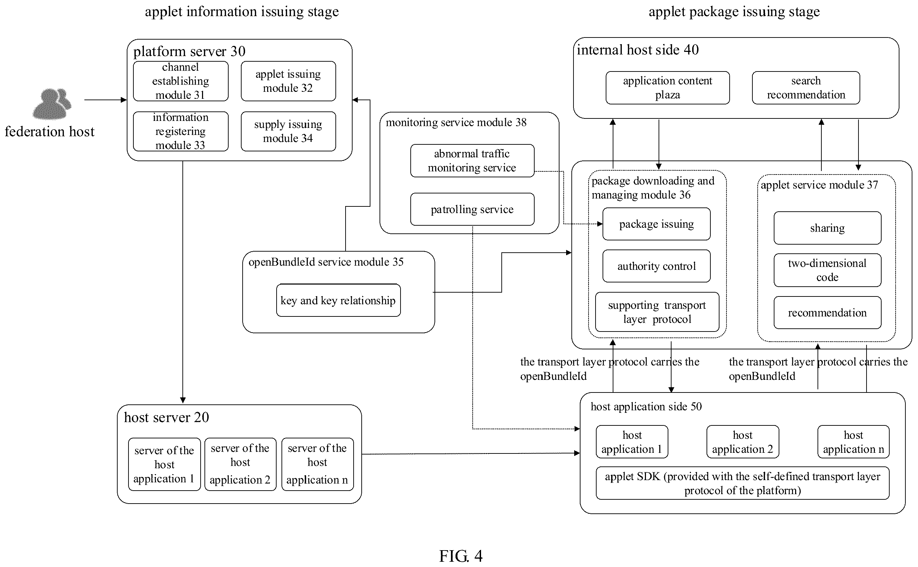

A specific flow of the applet information acquisition and the applet package acquisition according to an exemplary embodiment of the present disclosure is described below by referring to FIG. 4.

FIG. 4 is a schematic view of a system framework according to an exemplary embodiment of the present disclosure. Referring to FIG. 4, the system framework may include the host server 20, the platform server 30, an internal host side 40 and a host application side 50.

The applet provided by the platform server 30 can be operated on applications of federation partners of more than a predetermined number, so that the applications on which the applet provided by the platform server 30 operates can be called a federation host.

According to an embodiment of the present disclosure, the host server 20 is a backend operating server of the host application side 50. One or more host applications, such as a host application 1, a host application 2, ..., and a host application n, may operate on the host application side 50, n is an integer greater than or equal to 1.

As an example, as described above, the host application may be a social application, a map application, a video application, a search and resource application, or the like, and may also be a wireless network (WIFI) access point acquisition and network connection establishment application.

According to an embodiment of the present disclosure, the host application side 50 may further include an applet SDK, and the applet SDK may be provided with a transport layer protocol module, for example, the self-defined transport layer protocol of the platform side, for establishing the secure data transmission channel with the platform server 30 through the transport layer protocol before sending the applet package acquisition request.

According to an embodiment of the present disclosure, the platform server 30 provides the applet information and a server for downing the applet package. As shown in FIG. 4, the platform server 30 may include a channel establishing module 31, an applet issuing module 32, an information registering module 33, a supply issuing module 34, an openBundleId service module 35, a package downloading and managing module 36, an applet service module 37, and a monitoring service module 38.

As shown in FIG. 4, in an embodiment, in an applet information issuing stage, the platform server 30 may provide an information registering service for the host server 20 to register the host server 20 as a formal user through the information registering module 33, in response to an information registering request from the host server 20, so that the host server 20 may establish the secure data transmission channel with the platform server 30 through an identity of the formal user, and send the applet information acquisition request and the applet package acquisition request to the platform server 30 in a subsequent process.

According to an embodiment of the present disclosure, in the applet information issuing stage, the platform server 30 may establish the secure data transmission channel between the platform server 30 and the host server 20 through the channel establishing module 31 in response to a secure data transmission channel establishment request from the host server 20, and perform the bidirectional identity authentication during the establishing of the secure data transmission channel.

In the embodiment, for simplicity of description, reference may be made to the descriptions of the foregoing embodiments for the process of establishing the secure data transmission channel between the platform server and the host server, and details are not described again.

According to an embodiment of the present disclosure, in the applet information issuing stage, the platform server 30 may generate, in response to the applet information acquisition request from the host server20, the applet information list to be sent to the host server 20 and generate the encrypted openBundleID corresponding to the Appkey of each applet for the host server 20 that sends the applet information acquisition request through the openBundleId service module 35. Also, the platform server 30 may send the applet information list and the encrypted openBundleId corresponding to the Appkey of each applet to the host server 20 through the supply issuing module 34.

According to an embodiment of the present disclosure, the openBundleId service module 35 may generate the encrypted applet package identification corresponding to the applet key of each applet through a predetermined algorithm. The predetermined algorithm is used for representing an identification correspondence relationship and an encrypting key relationship (key and key relationship) between the Appkey of each applet and the corresponding encrypted openBundleId.

That is, the openBundleId service module 35 may be used to separately generate the openBundleId corresponding to the Appkey of each applet according to the host server 20, and the same applet of different host servers corresponds to different openBundleIds. Therefore, when the applet information is issued through the supply issuing module 34 in a subsequent process, the Appkey of each applet is replaced by the corresponding encrypted openBundleId.

According to an embodiment of the present disclosure, in the applet information issuing stage, in response to the applet information acquisition request sent by the host server 20, the supply issuing module 34 may send the applet information of the at least one applet and the applet package identification of each applet to the host server 20. As an example, the applet information of the at least one applet may include information such as the applet name, the applet icon, the applet text description and the like.

According to an embodiment of the present disclosure, in the applet information issuing stage, in response to the applet information acquisition request sent by the host server 20, the applet issuing module 32 may read a configuration file to determine a dynamic library referred by the applet, and may issue the dynamic library referred by loading the applet to the host server 20.

According to an embodiment of the present disclosure, the host application side 50 may further include the internal host side 40, i.e., a client corresponding to the host application provided by a provider of the platform server or a developer of the applet. As shown in FIG. 4, as an example, the internal host side 40 may provide an application scene such as an application content plaza and a search recommendation, for example, a music content plaza of a music playing software, which is not limited by the embodiments of the present disclosure. Also, the application scene that may be provided by the internal host side 40 may be flexibly adjusted according to an actual application requirement.

According to an embodiment of the present disclosure, the applet service module 37 of the platform server 30 may be used to provide a designated applet service, for example, to provide a sharing link for the applet, to provide a two-dimensional code for the applet, or to provide a recommended link for the applet.

According to an embodiment of the present disclosure, the package downloading management module 36 of the platform server 30 may be used to perform authority control, for example, to control that the applet packages that may be downloaded by different host applications are different, and that the applet services that may be used by different host applications are different.

According to an embodiment of the present disclosure, the user may send the applet package acquisition request to the platform server 30 through the host application operating on the host application side 50, the applet package acquisition request is a request sent to the package downloading management module 36 of the platform server 30 through the secure data transmission channel pre-established based on the preset transport layer protocol, and the openBundleId is carried in the request. For example, the request may also carry the digital signature certificate.

The package downloading management module 36 is used to receive the applet package acquisition request from the secure data transmission channel through the supported transport layer protocol, decrypt encrypted information carried in the request to acquire the openBundleId, and send the applet package of the applet to the host server 20 in the case where the identification (openBundleId) of the applet is verified to be the applet package identification which is sent to the host server 20 by the platform server 30 in advance.

According to an embodiment of the present disclosure, if the request carries the digital signature certificate, the package downloading management module 36 is further used to send the applet package of the applet to the host server 20 in the case where the identification (openBundleId) of the applet is verified to be the applet package identification which is sent to the host server 20 by the platform server 30 in advance and the digital signature certificate is successfully verified.

As shown in FIG. 4, in an embodiment, the platform server 30 may provide, through the monitoring service module 38, services of monitoring the abnormal traffic and patrolling the client identification of the host server. Specific processes of monitoring the abnormal traffic and patrolling the client identification of the host server may refer to the processes of performing the monitoring and reporting mechanism on the host server 20 through the applet framework in the applet package issuing process described by the above steps S71 to S72 and the processes of performing abnormal traffic monitoring on the traffic of the applet package acquisition request which is sent by the host application operated on the host application side 50 described by the above steps S81 to S83.

According to the applet package sending method disclosed by the embodiment of the present disclosure, the applet package identification corresponding to the applet key of each applet can be separately generated for the host server, that is, the same applet of different host servers has different applet package identifications, and thus authority control of the applet package downloaded by different host servers is reinforced.

According to the verifying on the digital signature certificate carried in the applet package acquisition request, the applet package of the applet is sent to the host server in the case where the digital signature certificate is successfully verified, so that legitimacy of the openBundleId carried in the applet package acquisition request is verified through the identity authentication, and thus safety during the sending of the applet package is improved.

It can prevent a certain host server from stealing information of any other host server to request the applet package and provide security for downloading of the applet package through establishing the secure data transmission channel between the platform server and the host server, performing the bidirectional identity authentication during the establishing of the security data transmission channel, and encrypting the client identification of the host server.

The private exchanging between host servers by bypassing the platform server can be effectively monitored through detecting the client identification of the host server and monitoring the traffic, thereby ensuring effective system communication and information interaction between the platform server and the legal host server of the applet.

The applet package sending method according to the embodiments of the present disclosure can solve problems of cheating, identity spoofing, authority control and the like during issuing the applet package by the platform server, and provide a complete request distributing scheme for standardizing a host issuing ecology of the applets. The applet package sending method according to the embodiments of the present disclosure can make the host servers and the applets be effectively and tightly surrounded on the applet platform, improve a condition of acquiring the applet package through cheating behaviors, and play a vital role in ensuring safety of commercial benefits of the applets and construction of alliance ecology.

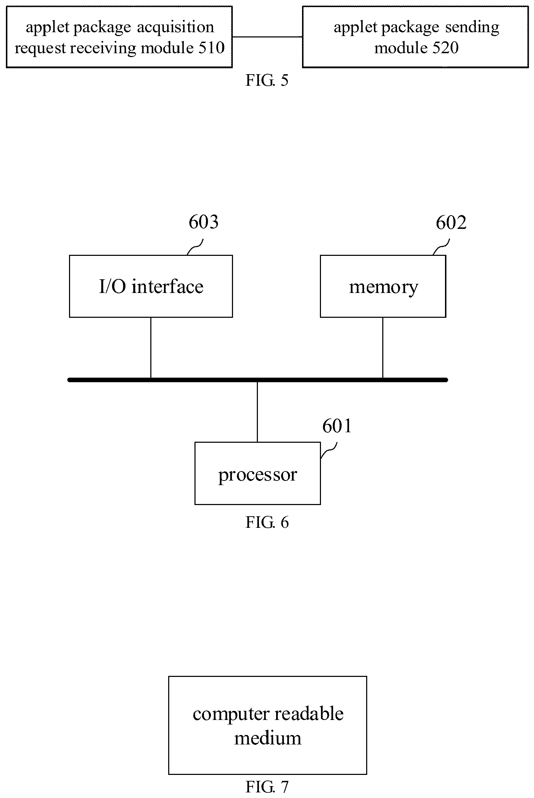

FIG. 5 is a block diagram of an applet package sending device according to an embodiment of the disclosure.

Referring to FIG. 5, an embodiment of the present disclosure provides an applet packet sending device, which may include an applet package acquisition request receiving module 510 and an applet package sending module 520.

The applet package acquisition request receiving module 510 is configured to acquire an identification of an applet included in an applet package acquisition request from the host server in response to the applet package acquisition request.

The applet package sending module 520 is configured to send an applet package of the applet to the host server in a case where the identification of the applet is verified to be an applet package identification which is sent to the host server by the platform server in advance, applet package identifications sent for the same applet of different host servers are different.

According to the applet package sending device of the embodiment of the present disclosure, the platform server acquires the identification of the applet included in the applet package acquisition request from the applet package acquisition request after receiving the applet package acquisition request from the host server, and sends the applet package of the applet to the host server in the case where the identification of the applet is verified to be the applet package identification which is sent to the host server by the platform server in advance, thereby reinforcing authority control and improving safety control during an applet packet sending process through different applet packet identifications of the same applet of different host servers.

According to an embodiment of the present disclosure, the applet package sending device may further include an information acquisition request receiving module which is configured to acquire the applet information of at least one applet and the applet key corresponding to each applet in response to an applet information acquisition request from the host server, before acquiring the identification of the applet included in the applet package acquisition request in response to the applet package acquisition request from the host server, an applet package identification generating module which is configured to generate the applet package identification based on the applet key of the applet, the applet key of each applet corresponds to one applet package identification, and the applet package identifications generated for the same applet of the different host servers are different, and an applet package identification sending module which is configured to send the applet information of the at least one applet and the applet package identification of each applet to the host server.

According to an embodiment of the present disclosure, the sent package identification is an encrypted applet package identification. The applet package sending device may further include an applet package identification encrypting module which is configured to encrypt the applet package identification of the applet by using a preset key to acquire the encrypted applet package identification after generating the applet package identification based on the applet key of the applet, the preset key for the host server is different from preset keys of other host servers, the preset key of the host server is stored in the platform server, and the preset key of the host server is in a non-public state.

According to an embodiment of the present disclosure, the sent applet package identification is an applet package identification in a valid state. The applet package sending device may further include an applet package identification updating module which is configured to generate a new applet package identification for an applet package identification meeting an invalid processing condition to acquire the new applet package identification of each applet, and an invalid state setting module which is configured to set the new applet package identification to the valid state and set the applet package identification meeting the invalid processing condition to the invalid state. The invalid processing condition includes at least one of that generation time of the applet package identification exceeds a preset valid period from current time, that server information of the platform server is changed, and that preset traffic abnormality information of the platform server is monitored.

According to an embodiment of the present disclosure, the applet package sending device may further include a preset transition period determining module which is configured to determine an interval period between the current time and the generation time of the corresponding new applet package identification to be equal to a preset transition period before the applet package identification meeting the invalid processing condition is set to the invalid state.

According to an embodiment of the present disclosure, the applet package sending device may further include an application identification generating module which is configured to generate a corresponding application identification based on the applet package identification of each applet after the applet package identification meeting the invalid processing condition is set to the invalid state, the applet package identifications corresponding to the same applet key generated at different time have the same application identification.

According to an embodiment of the present disclosure, the applet package sending module is further configured to send the applet information of the at least one applet, the applet package identification of each applet and the application identification corresponding the applet package identification of each applet to the host server.

According to an embodiment of the present disclosure, the applet package sending device may further include a digital signature certificate acquiring module which is configured to acquire a digital signature certificate included in the applet package acquisition request after the identification of the applet included in the applet package acquisition request is acquired, a digital signature certificate verifying module which is configured to verify the digital signature certificate by using an asymmetric encryption private key of the host server stored by the platform server in advance. The applet package sending module 510 is further configured to send the applet package of the applet to the host server in a case where the digital signature certificate is successfully verified.

According to an embodiment of the present disclosure, the applet package sending device may further include an identity authenticating module which is configured to perform a bidirectional identity authentication between the platform server and the host server in response to a data channel establishment request from the host server before acquiring the identification of the applet included in the applet package acquisition request in response to the applet package acquisition request, a client identification storing module which is configured to storing a client identification of the host server and establish a secure data transmission channel between the platform server and the host server in a case where the bidirectional identity authentication is passed, the client identification of the host server is used for uniquely identifying the host server and is stored in a closed source part of a Software Development Kit (SDK) of the platform server.

According to an embodiment of the present disclosure, the applet package acquisition receiving module 510 is further configured to acquire the encrypted communication content included in the applet package acquisition request in response to receiving applet acquisition request of the host server through the secure data transmission channel, and acquire the identification of the applet included in the communication content after the communication content is decrypted and the identity authenticating of the host server according to the client identification of the host server is successful.

According to an embodiment of the present disclosure, the applet package sending device may further include a host server monitoring module which is configured to determine the host server using the secure data transmission channel at present as an illegal host server in a case where the client identification of the host server using the secure data transmission channel at present is monitored to be inconsistent with the client identification of the host server corresponding to the establishing of the secure data transmission channel stored in the platform server, after receiving the applet package acquisition request from the host server, and a shielding module which is configured to shield the illegal host server.

According to an embodiment of the present disclosure, the applet package sending device may further include a first traffic monitoring module which is configured to monitor a request number of the applet package acquisition request received from the host server in a preset time period as a first request number monitoring result after sending the applet package of the applet to the host server, a second traffic monitoring module which is configured to continuously monitor the request number of the applet package acquisition request received in the preset time period as a second request number monitoring result after acquiring the new applet package identification of each applet, and an traffic abnormality information determining module which is configured to acquire traffic abnormality information of the platform server in a case where a difference value between the first request number monitoring result and the second request number monitoring result exceeds a preset request time threshold value.

According to an embodiment of the present disclosure, when the host server is a host server in a white list preset by the platform server and the traffic corresponding to the applet packet acquisition request of the host server is within a predetermined traffic threshold range, the applet package sending module 510 is further configured to send the applet package of at least one designated applet to the host server.

The applet package sending device according to the embodiments of the present application can solve problems of cheating, identity spoofing, authority control and the like during issuing the applet package by the platform server, and provide a complete request distributing scheme for standardizing a host issuing ecology of the applets. The applet package sending device according to the embodiments of the present disclosure can make the host servers and the applets be effectively and tightly surrounded on the applet platform, improve a condition of acquiring the applet package through cheating behaviors, and play a vital role in ensuring safety of commercial benefits of the applets and construction of alliance ecology.

It is to be understood that the present disclosure is not limited to the particular configurations and processes described in the above embodiments and illustrated in the accompanying drawings. For convenience and simplicity of description, detailed description of a known method is omitted herein, and the specific processes of systems, modules and units described above may refer to corresponding processes in the foregoing embodiments, which are not described again herein.

FIG. 6 shows a block diagram of an electronic device according to an embodiment of the present disclosure.

Referring to FIG. 6, the electronic device includes at least one processor 601, a memory 602 storing one or more programs which, when executed by the at least one processor 601, cause the at least one processor 601 to perform the applet package sending methods described above, and at least one input/output (I/O) interface 603 connected between the processor 601 and the memory 602 and configured to enable information interaction between the processor 601 and the memory 602.

The processor 601 is a device with data processing capability, which includes, but is not limited to, a Central Processing Unit (CPU) and the like. The memory 602 is a device with data storage capability, which includes, but is not limited to, Random Access Memory (RAM, such as SDRAM, DDR, and the like), Read Only Memory (ROM), Electrically Erasable Programmable Read Only Memory (EEPROM), Flash memory (FLASH). The I/O interface (read/write interface) 603 is connected between the processor 601 and the memory 602, and can enable the information interaction between the processor 601 and the memory 602, which includes, but is not limited to, a data bus and the like.

According to an embodiment of the present disclosure, the processor 601, the memory 602, and the I/O interface 603 are connected to each other by a bus to be connected to other components of the electronic device.

According an embodiment of the present disclosure, the electronic device may be implemented as the platform server that is the applet platform. The platform server may include a memory configured to store a program, and a processor configured to execute the program stored in the memory to perform the applet packet sending method described in the embodiments with reference to FIGs. 1 to 5.

According an embodiment of the present disclosure, the platform server may be a cloud server, and the applet package sending method described in the embodiments with reference to FIGs . 1 to 5 may be based on cloud computing performed by the cloud server.

According an embodiment of the present disclosure, artificial intelligence is a subject of studying a computer to make the computer simulate certain mental processes and intelligent behaviors of humans (such as learning, reasoning, planning, and the like), and includes technologies at a hardware level and technologies at a software level. The hardware technologies of artificial intelligence generally include technologies such as a sensor, a special artificial intelligence chip, cloud computing, distributed storage, large data processing and the like. The software technologies of artificial intelligence include directions such as a computer vision technology, a voice recognition technology, a natural language processing technology, a machine learning/deep learning technology, a large data processing technology, a knowledge map technology and the like.

FIG. 7 shows a block diagram of a computer readable medium according to an embodiment of the present disclosure. Referring to FIG. 7, the computer readable medium stores a computer program which, when executed by a processor, cause the processor to perform the applet package sending methods described above.

It will be understood by those of ordinary skill in the art that all or some of the steps of the methods, systems, functional modules/units in the devices disclosed above may be implemented as software, firmware, hardware, or suitable combinations thereof. In a hardware implementation, a division between functional modules/units described in the above descriptions does not necessarily correspond to a division of physical components. For example, one physical component may have a plurality of functions, or one function or step may be performed by several physical components in cooperation. Some or all of the physical components may be implemented as software executed by a processor, such as a central processing unit, a digital signal processor, or a microprocessor, as hardware, or as an integrated circuit, such as an application specific integrated circuit. Such software may be distributed on a computer readable media, which may include a computer storage media (or a non-transitory media) and a communication media (or a transitory media). The term "computer storage media" includes volatile and nonvolatile, removable and non-removable medias implemented in any method or technology for storage of information such as computer readable instructions, data structures, program modules or other data, as is well known to those skilled in the art. The computer storage media includes, but is not limited to, RAM, ROM, EEPROM, flash memory or other memory technology, CD-ROM, digital versatile disk (DVD) or other optical disk storage, magnetic cassette, magnetic tape, magnetic disk storage or other magnetic storage device, or any other media which can be used to store desired information and can accessed by a computer. In addition, communication media typically includes computer readable instructions, data structures, program modules or other data included in a modulated data signal such as a carrier wave or other transport mechanism, and includes any information delivery media, as is well known to those skilled in the art.

Example embodiments have been disclosed herein, and although specific terms are employed, they are used and should be interpreted in a generic and descriptive sense only and not for purposes of limitation. In some instances, it would be apparent to those skilled in the art that features, characteristics and/or elements described in connection with a particular embodiment may be used alone or in combination with features, characteristics and/or elements described in connection with other embodiments, unless expressly stated otherwise. It will, therefore, be understood by those skilled in the art that various changes in form and details may be made therein without departing from the scope of the disclosure as set forth in the appended claims.

## Claims

1. An applet package sending method carried out by a platform server (30), comprising:
acquiring an identification of an applet included in an applet package acquisition request from a host server (20) in response to the applet package acquisition request (S110); and
sending an applet package of the applet to the host server (20) in a case where the identification of the applet is verified to be an applet package identification which is sent to the host server (20) by the platform server (30) in advance, wherein for the applet, applet package identifications sent to different host servers are different (S120).

2. The applet package sending method of claim 1, wherein before acquiring the identification of the applet included in the applet package acquisition request from the host server (20) in response to the applet package acquisition request, the applet package sending method further comprises:
acquiring applet information of at least one applet and an applet key of each applet of the at least one applet in response to an applet information acquisition request from the host server (20);
generating the applet package identification based on the applet key of each applet, wherein the applet key of each applet corresponds to each applet package identification, and the applet package identifications generated for the same applet of different host servers are different; and
sending the applet information of the at least one applet and the applet package identification of each applet to the host server (20).

3. The applet package sending method of claim 2, wherein the applet package identification sent to the host server (20) is an encrypted applet package identification, and
wherein after generating the applet package identification based on the applet key of each applet, the applet package sending method further comprises:
encrypting the applet packet identification of each applet by using a preset key to acquire the encrypted applet packet identification, wherein the preset key corresponding to the host server (20) is different from a preset key corresponding to another host server, the preset key of the host server (20) is stored in the platform server (30), and the preset key of the host server (20) is in a non-public state.

4. The applet package sending method of claim 2, wherein the applet package identification sent to the host server (20) is an applet package identification in a valid state, and
wherein after generating the applet package identification based on the applet key of each applet, the applet package sending method further comprises:
generating a new applet package identification for an applet package identification meeting an invalid processing condition to acquire the new applet package identification of each applet; and
setting the new applet package identification to the valid state, and setting the applet package identification meeting the invalid processing condition to an invalid state;
wherein the invalid processing condition include at least one of that generation time of the applet package identification exceeds a preset valid period from current time, that server information of the platform server (30) is changed, and that preset traffic abnormality information of the platform server (30) is monitored.

5. The applet package sending method of claim 4, wherein before setting the applet identifications meeting the invalid processing condition to the invalid state, the applet package sending method further comprises:
determining that an interval period between the current time and a time point at which the new applet package identification is generated is equal to a preset transition duration.

6. The applet package sending method of claim 4, wherein after generating the new applet package identification for the applet package identification meeting the invalid processing condition, the applet package sending method further comprises:
generating an application identification based on the applet packet identification of each applet, wherein applet packet identifications corresponding to a same applet key generated at different time have a same application identification; and
wherein sending the applet information of the at least one applet and the applet package identification of each applet to the host server (20) comprises:
sending the applet information of the at least one applet, the applet package identification of each applet and the application identification of each applet to the host server (20).

7. The applet package sending method of claim 1, wherein after acquiring the identification of the applet included in the applet package acquisition request, the applet package sending method further comprises:
acquiring a digital signature certificate included in the applet package acquisition request; and
wherein sending the applet package of the applet to the host server (20) comprises:
verifying the digital signature certificate by using an asymmetric encryption private key of the host server (20) stored by the platform server (30) in advance, and sending the applet package of the applet to the host server (20) in a case where the digital signature certificate is successfully verified.

8. The applet package sending method of claim 1, wherein acquiring the identification of the applet included in the applet package acquisition request from the host server (20) in response to the applet package acquisition request comprises:
acquiring encrypted communication content included in the applet package acquisition request in response to receiving the applet package acquisition request of the host server (20) through a secure data transmission channel which is pre-established; and
acquiring the identification of the applet included in the encrypted communication content after the encrypted communication content is decrypted and identity authenticating of the host server (20) according to a client identification of the host server (20) is successful.

9. The applet package sending method of claim 8, wherein acquiring the identification of the applet included in the applet package acquisition request from the host server (20) in response to the applet package acquisition request further comprises:
determining the host server (20) using the secure data transmission channel at present as an illegal host server in a case where the client identification of the host server (20) using the secure data transmission channel at present is monitored to be inconsistent with a client identification of a host server corresponding to establishing of the secure data transmission channel stored in the platform server (30); and
shielding the illegal host server.

10. The applet package sending method of claim 1, wherein before acquiring the identification of the applet included in the applet package acquisition request from the host server (20) in response to the applet package acquisition request, the applet package sending method further comprises:
performing a bidirectional identity authentication between the platform server (30) and the host server (20) in response to a data channel establishment request of the host server (20); and
storing a client identification of the host server (20) and establishing a secure data transmission channel between the platform server (30) and the host server (20) in a case where the bidirectional identity authentication is passed,
wherein the client identification is used for uniquely identifying the host server (20), and the client identification of the host server (20) is stored in a closed source part of a Software Development Kit (SDK) of the platform server (30).

11. The applet package sending method of any one of claims 4-6, wherein after sending the applet package of the applet to the host server (20), the applet package sending method further comprises:
monitoring a request number of the applet package acquisition request of the host server (20) received in a preset time period as a first request number monitoring result;
continuously monitoring the request number of the applet package acquisition request in the preset time period as a second request number monitoring result after acquiring the new applet package identification of each applet; and
acquiring traffic abnormality information of the platform server (30) in a case where a difference value between the first request number monitoring result and the second request number monitoring result exceeds a preset request frequency threshold value.

12. The applet package sending method of any one of claims 1 to 9, wherein the host server (20) is a host server in a white list preset by the platform server (30), and traffic corresponding to the applet package acquisition request of the host server (20) is within a predetermined traffic threshold range; and
wherein sending the applet package of the applet to the host server (20) comprises sending an applet package of at least one designated applet to the host server (20).

13. An applet packet sending device, comprising:
an applet packet acquisition request receiving module (510) configured to acquire an identification of an applet included in an applet package acquisition request from a host server (20) in response to the applet package acquisition request; and
an applet package sending module (520) configured to send an applet package of the applet to the host server (20) in a case where the identification of the applet is verified to be an applet package identification which is sent to the host server (20) by the applet packet sending device in advance, wherein for the applet, applet package identifications sent to different host servers are different.

14. A computer readable medium storing a computer program which, when executed by a processor, cause the processor to perform the applet package sending method of any one of claims 1-12.

## Patentansprüche

1. Verfahren zum Senden eines Applikation-Pakets, das von einem Plattform-Server (30) ausgeführt wird, umfassend:
Erhalten einer Identifikation einer Applikation, die in einer Anfrage zum Erhalt eines Applikation-Pakets von einem Host-Server (20) enthalten ist, als Antwort auf die Anfrage zum Erhalt eines Applikation-Pakets (S110); und
Senden eines Applikation-Pakets der Applikation an den Host-Server (20) in einem Fall, in dem die Identifikation der Applikation als eine Applikationspaketidentifikation verifiziert wird, die im Voraus von dem Plattform-Server (30) an den Host-Server (20) gesendet wird, wobei für die Applikation Applikationspaketidentifikationen, die an verschiedene Host-Server gesendet werden, verschieden sind (S120).

2. Verfahren zum Senden eines Applikation-Pakets nach Anspruch 1, wobei vor dem Erhalten der Identifikation der Applikation, die in der Anfrage zum Erhalt eines Applikation-Pakets von dem Host-Server (20) enthalten ist, als Antwort auf die Anfrage zum Erhalt eines Applikation-Pakets das Verfahren zum Senden eines Applikation-Pakets ferner umfasst:
Erhalten von Applikationsinformationen von mindestens einer Applikation und eines Applikationsschlüssels jeder Applikation der mindestens einen Applikation als Antwort auf eine Anfrage zum Erhalt von Applikationsinformationen von dem Host-Server (20);
Erzeugen der Applikationspaketidentifikation basierend auf dem Applikationsschlüssel jeder Applikation, wobei der Applikationsschlüssel jeder Applikation jeder Applikationspaketidentifikation entspricht und die Applikationspaketidentifikationen, die für dieselbe Applikation von verschiedenen Host-Servern erzeugt werden, verschieden sind; und
Senden der Applikationsinformationen der mindestens einen Applikation und der Applikationspaketidentifikation jeder Applikation an den Host-Server (20).

3. Verfahren zum Senden eines Applikation-Pakets nach Anspruch 2, wobei die Applikationspaketidentifikation, die an den Host-Server (20) gesendet wird, eine verschlüsselte Applikationspaketidentifikation ist, und
wobei das Verfahren zum Senden eines Applikation-Pakets nach dem Erzeugen der Applikationspaketidentifikation basierend auf dem Applikationsschlüssel jeder Applikation ferner umfasst:
Verschlüsseln der Applikationspaketidentifikation jeder Applikation unter Verwendung eines voreingestellten Schlüssels, um die verschlüsselte Applikationspaketidentifikation zu erhalten, wobei der voreingestellte Schlüssel, der dem Host-Server (20) entspricht, von einem voreingestellten Schlüssel, der einem anderen Host-Server entspricht, verschieden ist, der voreingestellte Schlüssel des Host-Servers (20) im Plattform-Server (30) gespeichert ist und der voreingestellte Schlüssel des Host-Servers (20) in einem nicht öffentlichen Zustand ist.

4. Verfahren zum Senden eines Applikation-Pakets nach Anspruch 2, wobei die Applikationspaketidentifikation, die an den Host-Server (20) gesendet wird, eine Applikationspaketidentifikation in einem gültigen Zustand ist, und
wobei das Verfahren zum Senden eines Applikation-Pakets nach dem Erzeugen der Applikationspaketidentifikation basierend auf dem Applikationsschlüssel jeder Applikation ferner umfasst:
Erzeugen einer neuen Applikationspaketidentifikation für eine Applikationspaketidentifikation, die eine ungültige Verarbeitungsbedingung erfüllt, um die neue Applikationspaketidentifikation jeder Applikation zu erhalten; und
Einstellen der neuen Applikationspaketidentifikation auf den gültigen Zustand und Einstellen der Applikationspaketidentifikation, die die ungültige Verarbeitungsbedingung erfüllt, auf einen ungültigen Zustand;
wobei die ungültige Verarbeitungsbedingung mindestens eines von Folgendem umfasst: dass die Erzeugungszeit der Applikationspaketidentifikation einen voreingestellten gültigen Zeitraum ab der aktuellen Zeit überschreitet, dass Serverinformationen des Plattform-Servers (30) geändert werden und dass voreingestellte Verkehrsanomalie-Informationen des Plattform-Servers (30) überwacht werden.

5. Verfahren zum Senden eines Applikation-Pakets nach Anspruch 4, wobei das Verfahren zum Senden eines Applikation-Pakets vor dem Einstellen der Applikationsidentifikationen, die die ungültige Verarbeitungsbedingung erfüllen, auf den ungültigen Zustand ferner umfasst:
Bestimmen, dass ein Intervallzeitraum zwischen der aktuellen Zeit und einem Zeitpunkt, zu dem die neue Applikationspaketidentifikation erzeugt wird, gleich einer voreingestellten Übergangsdauer ist.

6. Verfahren zum Senden eines Applikation-Pakets nach Anspruch 4, wobei das Verfahren zum Senden eines Applikation-Pakets nach dem Erzeugen der neuen Applikationspaketidentifikation für die Applikationspaketidentifikation, die die ungültige Verarbeitungsbedingung erfüllt, ferner umfasst:
Erzeugen einer Anwendungsidentifikation basierend auf der Applikationspaketidentifikation jeder Applikation, wobei Applikationspaketidentifikationen, die demselben Applikationsschlüssel entsprechen, der zu verschiedenen Zeiten erzeugt wird, dieselbe Anwendungsidentifikation aufweisen; und
wobei das Senden der Applikationsinformationen der mindestens einen Applikation und der Applikationspaketidentifikation jeder Applikation an den Host-Server (20) umfasst:
Senden der Applikationsinformationen der mindestens einen Applikation, der Applikationspaketidentifikation jeder Applikation und der Anwendungsidentifikation jeder Applikation an den Host-Server (20).

7. Verfahren zum Senden eines Applikation-Pakets nach Anspruch 1, wobei das Verfahren zum Senden eines Applikation-Pakets nach dem Erhalten der Identifikation der Applikation, die in der Anfrage zum Erhalt eines Applikation-Pakets enthalten ist, ferner umfasst:
Erhalten eines digitalen Signaturzertifikats, das in der Anfrage zum Erhalt eines Applikation-Pakets enthalten ist; und
wobei das Senden des Applikation-Pakets der Applikation an den Host-Server (20) umfasst:
Verifizieren des digitalen Signaturzertifikats unter Verwendung eines privaten asymmetrischen Verschlüsselungsschlüssels des Host-Servers (20), der im Voraus von dem Plattform-Server (30) gespeichert wird, und Senden des Applikation-Pakets der Applikation an den Host-Server (20) in einem Fall, in dem das digitale Signaturzertifikat erfolgreich verifiziert wird.

8. Verfahren zum Senden eines Applikation-Pakets nach Anspruch 1, wobei das Erhalten der Identifikation der Applikation, die in der Anfrage zum Erhalt eines Applikation-Pakets von dem Host-Server (20) enthalten ist, als Antwort auf die Anfrage zum Erhalt eines Applikation-Pakets umfasst:
Erhalten eines verschlüsselten Kommunikationsinhalts, der in der Anfrage zum Erhalt eines Applikation-Pakets enthalten ist, als Antwort auf das Empfangen der Anfrage zum Erhalt eines Applikation-Pakets des Host-Servers (20) über einen sicheren Datenübertragungskanal, der im Voraus eingerichtet ist; und
Erhalten der Identifikation der Applikation, die in dem verschlüsselten Kommunikationsinhalt enthalten ist, nachdem der verschlüsselte Kommunikationsinhalt entschlüsselt ist und eine Identitätsauthentifizierung des Host-Servers (20) gemäß einer Client-Identifikation des Host-Servers (20) erfolgreich ist.

9. Verfahren zum Senden eines Applikation-Pakets nach Anspruch 8, wobei das Erhalten der Identifikation der Applikation, die in der Anfrage zum Erhalt eines Applikation-Pakets von dem Host-Server (20) enthalten ist, als Antwort auf die Anfrage zum Erhalt eines Applikation-Pakets ferner umfasst:
Bestimmen des Host-Servers (20), der den sicheren Datenübertragungskanal derzeit als einen illegalen Host-Server verwendet, in einem Fall, in dem die Client-Identifikation des Host-Servers (20), der den sicheren Datenübertragungskanal derzeit verwendet, als nicht konsistent mit einer Client-Identifikation eines Host-Servers überwacht wird, die dem Einrichten des sicheren Datenübertragungskanals entspricht, der in dem Plattform-Server (30) gespeichert ist; und
Abschirmen des illegalen Host-Servers.

10. Verfahren zum Senden eines Applikation-Pakets nach Anspruch 1, wobei vor dem Erhalten der Identifikation der Applikation, die in der Anfrage zum Erhalt eines Applikation-Pakets von dem Host-Server (20) enthalten ist, als Antwort auf die Anfrage zum Erhalt eines Applikation-Pakets das Verfahren zum Senden eines Applikation-Pakets ferner umfasst:
Durchführen einer bidirektionalen Identitätsauthentifizierung zwischen dem Plattform-Server (30) und dem Host-Server (20) als Antwort auf eine Anfrage zum Einrichten eines Datenkanals des Host-Servers (20); und
Speichern einer Client-Identifikation des Host-Servers (20) und Einrichten eines sicheren Datenübertragungskanals zwischen dem Plattform-Server (30) und dem Host-Server (20) in einem Fall, in dem die bidirektionale Identitätsauthentifizierung bestanden wird,
wobei die Client-Identifikation zum eindeutigen Identifizieren des Host-Servers (20) verwendet wird und die Client-Identifikation des Host-Servers (20) in einem geschlossenen Quellteil eines Software -Entwicklungs-Kits (SDK) des Plattform-Servers (30) gespeichert wird.

11. Verfahren zum Senden eines Applikation-Pakets nach einem der Ansprüche 4 bis 6, wobei das Verfahren zum Senden eines Applikation-Pakets nach dem Senden des Applikation-Pakets der Applikation an den Host-Server (20) ferner umfasst:
Überwachen einer Anfragenummer der Anfrage zum Erhalt eines Applikation-Pakets des Host-Servers (20), die in einem voreingestellten Zeitraum empfangen wird, als ein erstes Anfragenummer-Überwachungsergebnis;
kontinuierliches Überwachen der Anfragenummer der Anfrage zum Erhalt eines Applikation-Pakets im voreingestellten Zeitraum als ein zweites Anfragenummer-Überwachungsergebnis nach dem Erhalten der neuen Applikationspaketidentifikation jeder Applikation; und
Erhalten von Verkehrsanomalie-Informationen des Plattform-Servers (30) in einem Fall, in dem ein Differenzwert zwischen dem ersten Anfragenummer-Überwachungsergebnis und dem zweiten Anfragenummer-Überwachungsergebnis einen voreingestellten Anfragenhäufigkeitsschwellenwert überschreitet.

12. Verfahren zum Senden eines Applikation-Pakets nach einem der Ansprüche 1 bis 9, wobei der Host-Server (20) ein Host-Server in einer weißen Liste ist, die von dem Plattform-Server (30) voreingestellt wird, und der Verkehr, der der Anfrage zum Erhalt eines Applikation-Pakets des Host-Servers (20) entspricht, innerhalb eines vorbestimmten Verkehrsschwellenwertbereichs liegt; und
wobei das Senden des Applikation-Pakets der Applikation an den Host-Server (20) das Senden eines Applikation-Pakets von mindestens einer bestimmten Applikation an den Host-Server (20) umfasst.

13. Vorrichtung zum Senden eines Applikation-Pakets, umfassend:
ein Modul (510) zum Empfangen einer Anfrage zum Erhalt eines Applikation-Pakets, das konfiguriert ist, um eine Identifikation einer Applikation, die in einer Anfrage zum Erhalt eines Applikation-Pakets von einem Host-Server (20) enthalten ist, als Antwort auf die Anfrage zum Erhalt eines Applikation-Pakets zu erhalten; und
ein Modul (520) zum Senden eines Applikation-Pakets, das konfiguriert ist, um ein Applikation-Paket der Applikation an den Host-Server (20) in einem Fall zu senden, in dem die Identifikation der Applikation als eine Applikationspaketidentifikation verifiziert wird, die im Voraus von der Vorrichtung zum Senden eines Applikation-Pakets an den Host-Server (20) gesendet wird, wobei für die Applikation Applikationspaketidentifikationen, die an verschiedene Host-Server gesendet werden, verschieden sind.

14. Computerlesbares Medium, das ein Computerprogramm speichert, das, wenn es von einem Prozessor ausgeführt wird, den Prozessor veranlasst, das Verfahren zum Senden eines Applikation-Pakets nach einem der Ansprüche 1 bis 12 durchzuführen.

## Revendications

1. Procédé de transmission de paquet d'appliquette exécuté par un serveur de plate-forme (30), comprenant les étapes consistant à :
acquérir une identification d'une appliquette incluse dans une demande d'acquisition de paquet d'appliquette en provenance d'un serveur-hôte (20) en réponse à la demande d'acquisition de paquet d'appliquette (S110) ; et
transmettre un paquet d'appliquette de l'appliquette au serveur-hôte (20) dans un cas où l'identification de l'appliquette est vérifiée comme étant une identification de paquet d'appliquette qui est transmise au serveur-hôte (20) par le serveur de plate-forme (30) à l'avance, dans lequel, pour l'appliquette, les identifications de paquet d'appliquette transmises à différents serveurs-hôtes sont différentes (S120).

2. Procédé de transmission de paquet d'appliquette selon la revendication 1, dans lequel, avant d'acquérir l'identification de l'appliquette incluse dans la demande d'acquisition de paquet d'appliquette en provenance du serveur-hôte (20) en réponse à la demande d'acquisition de paquet d'appliquette, le procédé de transmission de paquet d'appliquette comprend en outre
acquérir des informations d'appliquette d'au moins une appliquette et d'une clé d'appliquette de chaque appliquette de l'au moins une appliquette en réponse à une demande d'acquisition d'informations d'appliquette en provenance du serveur-hôte (20)
générer l'identification de paquet d'appliquette sur la base de la clé d'appliquette de chaque appliquette, dans lequel la clé d'appliquette de chaque appliquette correspond à chaque identification de paquet d'appliquette, et les identifications de paquet d'appliquette générées pour la même appliquette de différents serveurs-hôtes sont différentes ; et
transmettre les informations d'appliquette de l'au moins une appliquette et l'identification de paquet d'appliquette de chaque appliquette au serveur-hôte (20).

3. Procédé de transmission de paquet d'appliquette selon la revendication 2, dans lequel l'identification de paquet d'appliquette transmise au serveur-hôte (20) est une identification de paquet d'appliquette chiffrée, et
dans lequel, après avoir généré l'identification de paquet d'appliquette sur la base de la clé d'appliquette de chaque appliquette, le procédé de transmission de paquet d'appliquette comprend en outre
chiffrer l'identification de paquet d'appliquette de chaque appliquette en utilisant une clé prédéfinie pour acquérir l'identification de paquet d'appliquette chiffrée, dans lequel la clé prédéfinie correspondant au serveur-hôte (20) est différente d'une clé prédéfinie correspondant à un autre serveur-hôte, la clé prédéfinie du serveur-hôte (20) est stockée dans le serveur de plate-forme (30), et la clé prédéfinie du serveur-hôte (20) est dans un état non public.

4. Procédé de transmission de paquet d'appliquette selon la revendication 2, dans lequel l'identification de paquet d'appliquette transmise au serveur-hôte (20) est une identification de paquet d'appliquette dans un état valide, et
dans lequel, après avoir généré l'identification de paquet d'appliquette sur la base de la clé d'appliquette de chaque appliquette, le procédé de transmission de paquet d'appliquette comprend en outre
générer une nouvelle identification de paquet d'appliquette pour une identification de paquet d'appliquette satisfaisant une condition de traitement invalide pour acquérir la nouvelle identification de paquet d'appliquette de chaque appliquette ; et
régler la nouvelle identification de paquet d'appliquette à l'état valide, et régler l'identification de paquet d'appliquette satisfaisant la condition de traitement invalide à un état invalide ;
dans lequel la condition de traitement invalide comprend au moins l'un parmi le fait que le temps de génération de l'identification de paquet d'appliquette dépasse une période valide prédéfinie à partir du temps actuel, le fait que des informations de serveur du serveur de plate-forme (30) sont changées, et le fait que des informations d'anomalie de trafic prédéfinies du serveur de plate-forme (30) sont surveillées.

5. Procédé de transmission de paquet d'appliquette selon la revendication 4, dans lequel, avant de régler les identifications d'appliquette satisfaisant la condition de traitement invalide à l'état invalide, le procédé de transmission de paquet d'appliquette comprend en outre :
déterminer qu'une période d'intervalle entre le temps actuel et un point temporel auquel la nouvelle identification de paquet d'appliquette est générée est égale à une durée de transition prédéfinie.

6. Procédé de transmission de paquet d'appliquette selon la revendication 4, dans lequel, après avoir généré la nouvelle identification de paquet d'appliquette pour l'identification de paquet d'appliquette satisfaisant la condition de traitement invalide, le procédé de transmission de paquet d'appliquette comprend en outre :
générer une identification d'application sur la base de l'identification de paquet d'appliquette de chaque appliquette, dans lequel des identifications de paquet d'appliquette correspondant à une même clé d'appliquette générée à un temps différent ont une même identification d'application ; et
dans lequel transmettre des informations d'appliquette de l'au moins une appliquette et de l'identification de paquet d'appliquette de chaque appliquette au serveur-hôte (20) comprend :
transmettre les informations d'appliquette de l'au moins une appliquette, l'identification de paquet d'appliquette de chaque appliquette et l'identification d'application de chaque appliquette au serveur-hôte (20).

7. Procédé de transmission de paquet d'appliquette selon la revendication 1, dans lequel, après avoir acquis l'identification de l'appliquette incluse dans la demande d'acquisition de paquet d'appliquette, le procédé de transmission de paquet d'appliquette comprend en outre :
acquérir un certificat de signature digitale inclus dans la demande d'acquisition de paquet d'appliquette ; et
dans lequel transmettre le paquet d'appliquette de l'appliquette au serveur-hôte (20) comprend :
vérifier le certificat de signature digitale en utilisant une clé privée de chiffrement asymétrique du serveur-hôte (20) stockée par le serveur de plate-forme (30) à l'avance, et transmettre le paquet d'appliquette de l'appliquette au serveur-hôte (20) dans un cas où le certificat de signature digitale est vérifié avec succès.

8. Procédé de transmission de paquet d'appliquette selon la revendication 1, dans lequel acquérir l'identification de l'appliquette incluse dans la demande d'acquisition de paquet d'appliquette en provenance du serveur-hôte (20) en réponse à la demande d'acquisition de paquet d'appliquette comprend :
acquérir un contenu de communication chiffré inclus dans la demande d'acquisition de paquet d'appliquette en réponse à la réception de la demande d'acquisition de paquet d'appliquette du serveur-hôte (20) par l'intermédiaire d'un canal de transmission de données sécurisé qui est préétabli ; et
acquérir l'identification de l'appliquette incluse dans le contenu de communication chiffré après que le contenu de communication chiffré a été déchiffré et qu'une authentification d'identité du serveur-hôte (20) selon une identification de client du serveur-hôte (20) a réussi.

9. Procédé de transmission de paquet d'appliquette selon la revendication 8, dans lequel acquérir l'identification de l'appliquette incluse dans la demande d'acquisition de paquet d'appliquette en provenance du serveur-hôte (20) en réponse à la demande d'acquisition de paquet d'appliquette comprend en outre :
déterminer que le serveur-hôte (20) utilisant le canal de transmission de données sécurisé actuellement est un serveur-hôte illégal dans un cas où l'identification de client du serveur-hôte (20) utilisant le canal de transmission de données sécurisé actuellement est surveillée comme étant incompatible avec une identification de client d'un serveur-hôte correspondant à l'établissement du canal de transmission de données sécurisé stocké dans le serveur de plate-forme (30) ; et
protéger le serveur-hôte illégal.

10. Procédé de transmission de paquet d'appliquette selon la revendication 1, dans lequel, avant d'acquérir l'identification de l'appliquette incluse dans la demande d'acquisition de paquet d'appliquette en provenance du serveur-hôte (20) en réponse à la demande d'acquisition de paquet d'appliquette, le procédé de transmission de paquet d'appliquette comprend en outre
exécuter une authentification d'identité bidirectionnelle entre le serveur de plate-forme (30) et le serveur-hôte (20) en réponse à une demande d'établissement de canal de données du serveur-hôte (20) ; et
stocker une identification de client du serveur-hôte (20) et établir un canal de transmission de données sécurisé entre le serveur de plate-forme (30) et le serveur-hôte (20) dans un cas où l'authentification d'identité bidirectionnelle est réussie,
dans lequel l'identification de client est utilisée pour identifier de manière unique le serveur-hôte (20), et l'identification de client du serveur-hôte (20) est stockée dans une partie source fermée d'un kit de développement logiciel (SDK) du serveur de plate-forme (30).

11. Procédé de transmission de paquet d'appliquette selon l'une quelconque des revendications 4 à 6, dans lequel, après avoir transmis le paquet d'appliquette de l'appliquette au serveur-hôte (20), le procédé de transmission de paquet d'appliquette comprend en outre :
surveiller un numéro de demande de la demande d'acquisition de paquet d'appliquette du serveur-hôte (20) reçue dans une période de temps prédéfinie en tant que premier résultat de surveillance de numéro de demande ;
surveiller en continu le numéro de demande de la demande d'acquisition de paquet d'appliquette dans la période de temps prédéfinie en tant que second résultat de surveillance de numéro de demande après avoir acquis la nouvelle identification de paquet d'appliquette de chaque appliquette ; et
acquérir des informations d'anomalie de trafic du serveur de plate-forme (30) dans un cas où une valeur de différence entre le premier résultat de surveillance de numéro de demande et le second résultat de surveillance de numéro de demande dépasse une valeur de seuil de fréquence de demande prédéfinie.

12. Procédé de transmission de paquet d'appliquette selon l'une quelconque des revendications 1 à 9, dans lequel le serveur-hôte (20) est un serveur-hôte dans une liste blanche prédéfinie par le serveur de plate-forme (30), et le trafic correspondant à la demande d'acquisition de paquet d'appliquette du serveur-hôte (20) est dans une plage de seuil de trafic prédéterminée ; et
dans lequel transmettre le paquet d'appliquette de l'appliquette au serveur-hôte (20) comprend de transmettre un paquet d'appliquette d'au moins une appliquette désignée au serveur-hôte (20).

13. Dispositif de transmission de paquet d'appliquette, comprenant :
un module de réception de demande d'acquisition de paquet d'appliquette (510) configuré pour acquérir une identification d'une appliquette incluse dans une demande d'acquisition de paquet d'appliquette en provenance d'un serveur-hôte (20) en réponse à la demande d'acquisition de paquet d'appliquette ; et
un module de transmission de paquet d'appliquette (520) configuré pour transmettre un paquet d'appliquette de l'appliquette au serveur-hôte (20) dans un cas où l'identification de l'appliquette est vérifiée comme étant une identification de paquet d'appliquette qui est transmise au serveur-hôte (20) par le dispositif de transmission de paquet d'appliquette à l'avance, dans lequel, pour l'appliquette, les identifications de paquet d'appliquette transmises à différents serveurs-hôtes sont différentes.

14. Support lisible par ordinateur stockant un programme informatique qui, lorsqu'il est exécuté par un processeur, amène le processeur à exécuter le procédé de transmission de paquet d'appliquette selon l'une quelconque des revendications 1 à 12.
